Europäisches Patentamt

European Patent Office

Office européen des brevets

(19)

(11) Veröffentlichungsnummer : **0 032 598**
**B1**

(12)

# EUROPÄISCHE PATENTSCHRIFT

(45) Veröffentlichungstag der Patentschrift :
11.05.83

(21) Anmeldenummer : 80201124.7

(22) Anmeldetag : 28.11.80

(51) Int. Cl.³ : **H 04 Q  7/00**, H 04 B  5/04,
**H 04 B  1/16**

(54) Tragbarer Rufempfänger mit einem Schieberegister und einem Gleichspannungs-Wandler.

(30) Priorität : 17.01.80 CH 381/80

(43) Veröffentlichungstag der Anmeldung :
29.07.81 Patentblatt 81/30

(45) Bekanntmachung des Hinweises auf die Patenterteilung : 11.05.83 Patentblatt 83/19

(84) Benannte Vertragsstaaten :
BE CH DE FR GB LI NL SE

(56) Entgegenhaltungen :
CH A 583 485
PHILIPS  TELECOMMUNICATION  REVIEW,
Band 36, Nr. 1, April 1978, Seiten 41-52 Hilversum, NI. A. M. MORRIEN et ai. : « Digital paging
encoder/decoders »
PATENTS ABSTRACTS OF JAPAN, Band 2,
Nr. 115, 25. September 1978, Seite 6514E78
PATENTS ABSTRACTS OF JAPAN, Band 3,
Nr. 70, 16. Juni 1979, Seite 101E117
(73) Patentinhaber : Autophon A.G.
Ziegelmattstrasse 1-15
CH-4500 Solothurn 3 (CH)

(72) Erfinder : Kummer, Hans
Felsenweg 5
CH-4536 Attiswil/BE (CH)

(74) Vertreter : Bovard, Fritz Albert et ai
Bovard & Cie. Patentanwälte VSP-Rechtsanwälte
Optingenstrasse 16
CH-3000 Bern 25 (CH)

## Tragbarer Rufempfänger mit einem Schieberegister und einem Gleichspannungs-Wandler

Die vorliegende Erfindung betrifft einen von einer Batterie gespeisten tragbaren Rufempfänger.

Aus der schweizerischen Patentschrift 583 485 ist ein derartiger Empfänger bekannt geworden, welcher auf den drahtlosen Empfang mindestens eines Rufsignals anspricht, das als kodierte Folge von je gleich langen Schwingungspaketen ausgesendet wird. Diese Schwingungspakete weisen dabei eine einzige Frequenz auf, und die Abstände zwischen zwei Schwingungspaketen, welche zwei verschieden grosse Werte aufweisen, sind für den Informationsgehalt der Folge massgebend. Der bekannte Rufempfänger enthält einen Verstärker, welcher die an seinen Eingang treffenden Signale verstärkt und sie einem auf die genannte Frequenz abgestimmten Bandfilter zuführt. Jener Rufempfänger enthält ferner einen monostabilen Multivibrator, welcher während seiner Arbeitslage unbeeinflussbar ist und von am Ausgang des Bandfilters auftretenden Signalen angestossen wird und dessen Haltezeit der ausgesendeten Länge der genannten Schwingungspakete entspricht. Die Betriebszustände dieses Multivibrators geben somit, unabhängig von der Qualität des Empfangs, das gesendete Signal wieder.

Im Rufempfänger, der in der erwähnten Patentschrift beschrieben ist, werden die Schwingungspakete anhand ihrer Abstände dekodiert, und mit Hilfe eines durch die Schwingungspakete fortgeschalteten Zählers werden die auf diese Weise gewonnenen einzelnen Binärwerte nacheinander mit gespeicherten Werten verglichen. Beim Uebereinstimmen der empfangenen mit den gespeicherten Werten wird durch einen Tonfrequenzerzeuger und einen daran angeschlossenen Lautsprecher ein Aufmerksamkeitszeichen erzeugt.

Es hat sich nun gezeigt, dass es insbesondere in Fällen, in denen ein Empfänger auf mehr als ein Rufsignal ansprechen soll oder in welchen ausser dem Anruf noch andere Signale übertragen werden sollen, gegenüber der beschriebenen Methode vorteilhafter ist, die empfangene dekodierte Signalfolge mit Hilfe eines Schieberegisters auszuwerten. Die Information wird dann einer Serie-Parallel-Wandlung unterzogen und parallel verarbeitet. Dabei ergibt sich jedoch die Schwierigkeit, dass einerseits aus Gründen des Platzbedarfs angestrebt wird, zum Betrieb des Empfängers eine einzellige Batterie zu verwenden, während andererseits die heute erhältlichen Schieberegister zu ihrem Betrieb eine Spannung von 5 V benötigen und somit nicht direkt mit einer einzelligen Batterie betrieben werden können.

Es ist nun allgemein üblich, in einem solchen Falle die Speisespannung für das Schieberegister mit einem Gleichspannungswandler zu erzeugen, welcher die niedrige Spannung mit einer in der Grössenordnung von 100 kHz liegenden Frequenz zerhackt, transformiert und wiederum gleichrichtet. In einem kleinen Gerät ist es jedoch nicht zu vermeiden, dass von Gleichspannungswandler erzeugte Störspannungen auf den Verstärkereingang gelangen. Da ein Verstärker seiner Natur gemäss eine Begrenzerwirkung ausübt oder sogar ausdrücklich als Begrenzer ausgelegt ist, wird durch ein solches Störsignal die Empfindlichkeit des Empfängers herabgesetzt, und es stellt sich die Aufgabe, diese Nachteile zu umgehen.

Entsprechende Aufgaben stellen sich in derartigen Rufempfängern in bezug auf die Beeinflussung des Verstärkers durch den Tonfrequenzerzeuger. In Rufempfängern, wie sie aus der schweizerischen Patentschrift 508 955 und aus der deutschen Patentschrift 19 48 004 bekannt geworden sind, ist eine Beeinflussung der letztgenannten Art verhindert. In beiden Empfängern werden Anrufsignale verarbeitet, deren Dauer ungefähr der Dauer des Aufmerksamkeitszeichens entspricht. Beim Empfänger nach der erstgenannten Patentschrift wird das Aufmerksamkeitszeichen in gegenüber seiner Gesamtdauer kurze Impulse aufgelöst, so dass nach Beendigung jedes Impulses ein weiteres Vorhandensein des Anrufsignals ungestört geprüft werden kann, während beim Empfänger nach der zweitgenannten Patentschrift das Aufmerksamkeitszeichen erst nach Beendigung des Empfangs des Anrufsignals erzeugt wird.

Da sich die vorliegende Erfindung jedoch auf einen Empfänger bezieht, welcher Reihen kurzer, nicht unterteilbarer Impulse verarbeitet und da der Gleichspannungswandler — im Gegensatz zum Tonfrequenzerzeuger — schon während der Auswertung des Anrufsignals und nicht erst während des letzten oder im Anschluss an das letzte Zeichen betrieben werden muss, können die genannten bekannten Grundsätze nicht in unveränderter Form für die Bekämpfung der Störungen des Empfangs durch den Gleichspannungswandler angewendet werden.

Die vorliegende Erfindung ermöglicht nun, diese Grundsätze derart anzupassen, dass sie auch in einem Empfänger mit den eingangs beschriebenen Merkmalen angewendet werden können. Sie betrifft einen solchen tragbaren Empfänger, dessen Kennzeichen erste Schaltungsmittel sind, welche vom genannten Multivibrator beeinflusst sind und von diesem Multivibrator während seines Arbeitszustandes ebenfalls in den Arbeitszustand versetzt werden und welche in ihrem Arbeitszustand den Gleichspannungswandler speisen und in ihrem Ruhezustand diese Speisung unterbrechen. Der Gleichspannungswandler wird somit nur dann betrieben, wenn sich der Multivibrator im Arbeitszustand befindet und weder durch das Vorhandensein noch durch das infolge Verminderung der Empfindlichkeit bewirkte Fehlen empfangener Signale beeinflusst werden kann.

In einer besonderen Ausführungsform der Erfindung sind auch durch den Gleichspannungswandler hervorgerufene Störungen verhindert, welche durch das Filter gelangen und den Empfang eines Signals vortäuschen und auf diese Weise Störungen verursachen könnten. Dies wird erreicht, indem der Verstärker unwirksam geschaltet wird, solange der Gleichspannungswandler in Betrieb ist. In einer weitern besondern Ausführungsform der Erfindung werden im Falle eines erfolgreich zustandegekommenen Anrufs störende Einflüsse eines Tonfrequenzerzeugers vermieden, und der Gleichspannungswandler wird auch nach Rückkehr des Multivibrators in seinen Ruhezustand bis zur Beendigung des Rufvorgangs in Betrieb gehalten.

In der Folge wird die Erfindung anhand eines Ausführungsbeispiels erklärt.

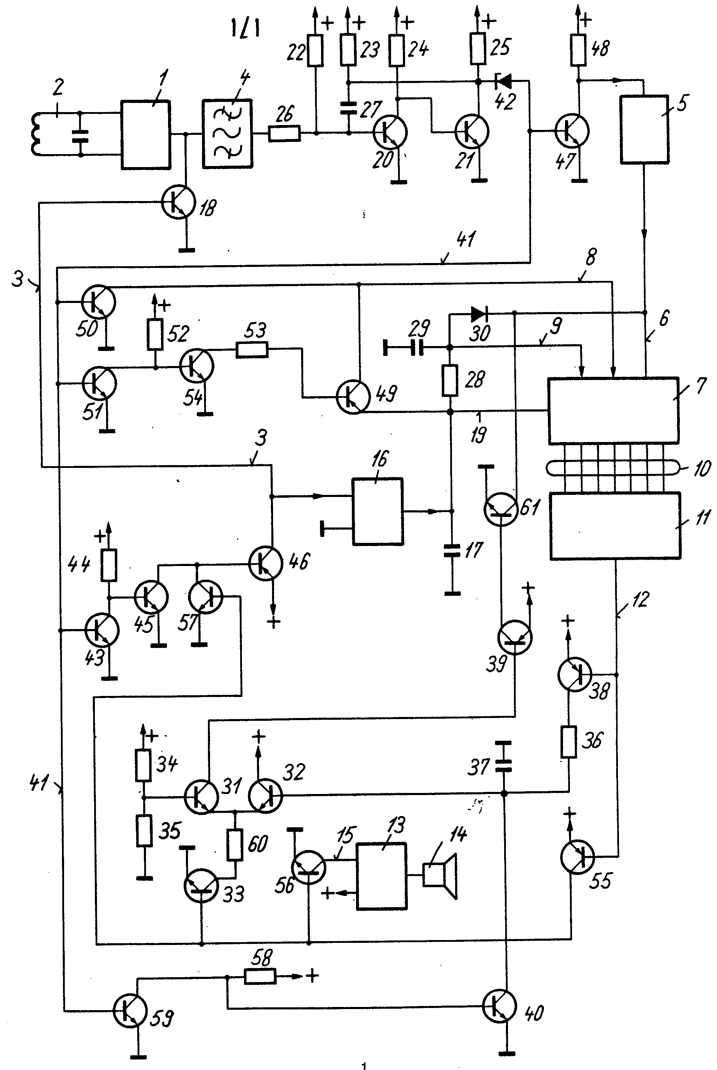

Die Figur zeigt das Schema eines tragbaren Rufempfängers, wobei die direkt mit der Erfindung im Zusammenhang stehenden Teile in allen Einzelheiten und die übrigen als Baugruppen in Blockform dargestellt sind.

Der Empfänger ist Bestandteil einer Anlage, bei welcher die Schwingungspakete mit einer zwischen 20 und 40 kHz liegenden Frequenz durch Induktionsschleifen von einer nicht dargestellten Sendeeinrichtung nach den Empfängern übermittelt werden. Das ausgesendete Signal wird vom abgestimmten Antennenkreis 2 dem Verstärker 1 zugeführt. Das Bandfilter 4 am Ausgang des Verstärkers ist ebenfalls auf die Empfangsfrequenz abgestimmt. Durch einen über die Verbindung 3 steuerbaren Transistor 18 ist der Ausgang des Verstärkers kurzschliessbar.

Ein Dekodierer 5, welcher einen monostabilen Multivibrator enthält, legt, sofern seinem Eingang ein positiver Impuls zugeführt wird, mit einer gewissen Verzögerung an seinen Ausgang Nullpotential. Nach Ablauf einer bestimmten, von der Beendigung des Impulses an gemessenen Zeit, welche mit jedem eintreffenden Impuls neu zu laufen beginnt, wird der Ausgang des Dekodierers gesperrt und damit das Nullpotential entfernt. Die Verbindung 6 zwischen diesem Ausgang und dem Eingang des Schieberegisters 7, welche im Schieberegister hochohmig mit einem positiven Potential verbunden ist, nimmt somit, gesteuert durch den Dekodierer 5, die beiden Binärwerte Nullpotential und positives Potential an. Das Schieberegister 7 weist einen weitern Eingang 8 für Schiebepulse (clock), einen Eingang 9 für die Rückstellung und einen Eingang 19 für die Speisung auf. Die drei letztgenannten Eingänge müssen mit einer Spannung von 5 V betrieben werden. An den Ausgängen 10 des Schieberegisters 7 erscheint, nachdem es sämtliche zu einer Folge von Schwingungspaketen gehörenden Schiebeimpulse erhalten hat, die empfangene Folge als binäre Parallel-Information.

Im Kodespeicher 11 ist ein Informationsmuster (oder mehrere) fest gespeichert, bei dessen Erscheinen an den Ausgängen 10 des Schieberegisters der betreffende Empfänger angerufen werden soll. Der Kodespeicher 11 legt, sofern die an den Ausgängen 10 des Schieberegisters anstehende Information mit einem dieser Muster übereinstimmt, seinen im Ruhezustand auf positivem Potential befindlichen Ausgang 12 an Masse.

Ein Tonfrequenzerzeuger 13 erzeugt im Lautsprecher 14 ein Aufmerksamkeitszeichen, solange die Verbindung 15 an Masse gelegt wird. Der Gleichspannungswandler 16 gibt eine Speisespannung von 5 V ab, solange der Transistor 46 leitend ist und dem Wandler somit positives Speisepotential zugeführt wird. Der Kondensator 17 wirkt als Speicher und versorgt die Verbraucher auch während den Betriebspausen des Gleichspannungswandlers 16 mit Speiseenergie.

Ausser diesen als Blöcke gezeigten Schaltungsgruppen sind drei Zeitkreise mit ihren Einzelheiten dargestellt. Der erste, ein monostabiler Multivibrator, welcher während seines Arbeitszustandes nicht beeinflusst werden kann, besteht aus den Transistoren 20 und 21 und den Widerständen 22, 23, 24 und 25 und dem Kondensator 27. Während des Ruhezustandes fliesst ein Strom durch den Widerstand 22 und den Transistor 20, wodurch dieser leitend und demzufolge der Transistor 21 gesperrt ist. Der Kondensator 27 ist dabei geladen. Trifft nun über den Widerstand 26 eine Wechselspannung auf die Basis des Transistors 20, wird dieser durch die erste negative Halbwelle gesperrt und lässt damit den Transistor 21 leitend werden, worauf infolge des geladenen Kondensators 27 die Basis des Transistors 20 stark negativ wird. Der Kondensator 27 entlädt sich über die Widerstände 22 und 23, und, wenn er entladen ist, kehrt der Transistor 20 wiederum in die leitende Ausgangslage zurück und der Transistor 21 wird wiederum gesperrt. Sowohl der Beginn als auch das Ende dieses vorübergehenden Arbeitszustandes des Multivibrators hängen ausschliesslich vom Anfangszeitpunkt des empfangenen Signals ab.

Ein zweiter Zeitkreis ist durch den Widerstand 28, den Kondensator 29 und die Diode 30 gebildet. Solange die Verbindung 6 am Dekodierer 5 gesperrt und sofern am Ausgang des Gleichspannungswandlers 16 Spannung vorhanden ist, lädt sich der Kondensator 29 über den Widerstand 28 auf, wodurch das Potential an der Verbindung 9 solange ansteigt, bis es nach einer bestimmten Zeit einen Wert erreicht, bei welchem es die vorher kurz erwähnte Rückstellung des Schieberegisters 7 bewirkt. Solange jedoch durch den Dekodierer 5 Masse an die Verbindung 6 gelegt ist, wird der Kondensator 29 entladen und kann sich nicht aufladen. Bei abwechslungsweisem Anlegen von Masse an die Verbindung 6, unterbrochen vom gesperrten Zustand, fängt die genannte bestimmte, bis zum Eintreten einer Rückstellung verstreichende Zeit immer erst von der letzten Sperrung zu laufen an.

Ein weiterer, als monostabiler Multivibrator ausgebildeter Zeitkreis ist durch die drei Transistoren 31, 32 und 33, die vier Widerstände 34, 35, 36 und 60 und den Kondensator 37 gebildet. Sofern der Transistor 33 leitend, der Transistor 38 gesperrt und der Kondensator 37 entladen angenommen werden, liegt die Basis des Transistors 32 auf Massepotential. Die Basis des Transistors 31 liegt dagegen auf einem durch den aus den Widerständen 34 und 35 gebildeten Spannungsteiler bestimmten, positiven Potential. Dieser Transistor leitet daher, und wegen dem am Widerstand 60 auftretenden Spannungsabfall ist der Transistor 32 zwischen Emitter und Basis vorgespannt und daher gesperrt. Der Transistor 39 ist aufgrund des leitenden Transistors 31 ebenfalls leitend. Wird nun der Transistor 38 in den leitenden Zustand versetzt, lädt sich der Kondensator 37 über den Widerstand 36 langsam auf, wodurch an der Basis des Transistors 32 das Potential steigt. Sobald dieses Potential dasjenige an der Basis des Transistors 31 erreicht hat, wechselt in bekannter Weise der Zustand der beiden Transistoren, worauf auch der Transistor 39 sperrt. Die Zeit von der Entsperrung des Transistors 38 bis zur Sperrung des Transistors 39 ist durch den Kondensator 37 und den Widerstand 36 bestimmt. Vor einer neuen Zeitmessung muss in später erklärter Weise der Kondensator 37 durch den Transistor 40 entladen werden.

In der Folge werden nun die Vorgänge beim Empfang von Signalen beschrieben.

Im Ruhezustand des Empfängers sperrt der Transistor 21, und an die Verbindung 41 ist somit über die Zenerdiode 42 Pluspotential gelegt. Die Transistoren 47, 50, 51, 43 und 59 sind somit leitend. Infolge des leitenden Transistors 43 ist der über den Widerstand 44 damit verkoppelte Transistor 45 gesperrt. Dies bewirkt auch die Sperrung des Transistors 46, wodurch der Gleichspannungswandler 16 ausser Betrieb gesetzt und der Transistor 18 ebenfalls gesperrt ist. Das Ausgangssignal des Verstärkers 1 wird somit dem Filter 4 zugeführt. Erreicht nun ein Schwingungspaket mit der Durchlassfrequenz des Filters 4 die Empfangsspule 2, wird mit dessen ersten Schwingungen der Multivibrator mit den Transistoren 20 und 21 gekippt und somit die Verbindung 41 während einer gewissen Zeit an Masse gelegt. Der somit aufgrund des Empfangs eines Schwingungspaketes auf der Verbindung 41 auftretende Impuls wird nun über den Transistor 47 in Verbindung mit dem Widerstand 48 dem Dekodierer 5 zugeführt. Ausserdem wird über die Transistoren 43, 45 und 46 der Gleichspannungswandler 16 in Betrieb gesetzt und mit dem Transistor 18 der Ausgang des Verstärkers 1 kurzgeschlossen. Da der aus den Transistoren 20 und 21 gebildete Multivibrator, nachdem er sich in seiner Arbeitslage befindet, nicht mehr beeinflusst werden kann, spielt diese Unwirksam-Schaltung des Verstärkers keine Rolle.

Infolge des Betriebs des Gleichspannungswandlers wird der Kondensator 17 aufgeladen, und es wird ein positives Potential an den Emitter des Transistors 49 gelegt. Durch die Sperrung des Transistors 51 werden unter Mitwirkung der Widerstände 52 und 53 die Transistoren 54 und 49 in den leitenden Zustand gesteuert. Dies bewirkt, zusammen mit der Sperrung des Transistors 50, dass die Verbindung 8, welche im Ruhezustand über den Transistor 50 an Masse gelegt war, auf das vom Gleichspannungswandler 16 erzeugte Potential verbracht wird. Infolgedessen erhält das Schieberegister 7 einen Schiebeimpuls, womit das infolge des empfangenen Impulses an der Verbindung 6 auftretende Nullpotential als erster Binärwert in das Schieberegister 7 eingespeichert wird.

Nach Beendigung des ersten Impulses auf der Verbindung 41 wird der Gleichspannungswandler 16 wiederum ausser Betrieb gesetzt und der Verstärker 1 wiederum eingeschaltet. Die Kapazität des Kondensators 17 ist derart bemessen, dass seine Entladung über den Widerstand 28 und durch die Speisung des Schieberegisters bis zur nächsten Inbetriebsetzung des Gleichspannungswandlers keine wesentliche Absenkung der Spannung ergibt und somit die Speisung des Schieberegisters während dieser Zeit sichergestellt ist.

Bei weiteren eintreffenden Schwingungspaketen spielen sich die gleichen Vorgänge ab, welche beschrieben wurden. Ist dabei der zeitliche Abstand des betreffenden Schwingungspaketes vom vorhergehenden klein, befindet sich während des Auftretens des Schiebeimpulses die Verbindung 6 auf Nullpotential, wogegen bei einem grossen zeitlichen Abstand die Verbindung am Anfang des Schiebeimpulses auf hohem Potential liegt, welches dann auf ein Nullpotential wechselt. Die in das Schieberegister eingespeicherten Binärwerte hängen dabei vom Potential der Verbindung 6 beim Beginn des Schiebeimpulses ab.

Da beim Empfang aufeinanderfolgender Schwingungspakete der Verbindung 6 periodisch an Masse gelegt wird, kann sich der Kondensator 29 nicht auf eine hohe Spannung aufladen. Erst nach Beendigung der empfangenen Folge von Schwingungspaketen bleibt, sofern die Folge nicht zum Anruf des betreffenden Empfängers bestimmt war, die Verbindung 6 längere Zeit auf einem hohen Potential, so dass sich der Kondensator 29 aufladen kann und das Schieberegister 7 über die Verbindung 9 zurückgestellt wird.

Stellt es sich dagegen am Ende des Empfanges einer Folge von Schwingungspaketen heraus, dass der Anruf für den betreffenden Empfänger bestimmt war, wechselt die Verbindung 12, welche im Ruhezustand an positivem Potential liegt, auf Nullpotential, wobei dieser Zustand bis zur Rückstellung des Schieberegisters andauert. Infolge dieser Aenderung werden die beiden vorher gesperrt gewesenen Transistoren 38 und 55 leitend. Der Transistor 55 legt dabei positives Potential an die Transistoren 56, 33 und 57, welche ebenfalls leitend werden. Der Transistor 56 schaltet das Aufmerksamkeitszeichen ein, während die beiden andern den Zustand aufrecht erhalten, welcher während des Arbeitszustandes des aus den Transistoren 20 und 21 bestehenden Multivibrators vorhanden ist. Der Transistor 33 bewirkt dabei, dass, wie früher erklärt wurde, über den Widerstand 60 und den Transistor 31 der Transistor 39 in den leitfähigen Zustand versetzt wird. Der Transistor 39 bewirkt seinerseits, dass der Transistor 61 Masse an die Verbindung 6 legt. Ueber den Transistor 57 wird der Transistor 46 im leitenden·Zustand und damit der Gleichspannungswandler im Betriebszustand erhalten, während der Ausgang des Verstärkers 1 durch den Transistor 18 kurzgeschlossen wird. Durch den Transistor 61 wird die Rückstellung des Schieberegisters verhindert, und die Beibehaltung seines Zustandes wird durch die Aufrechterhaltung des Betriebes des Gleichspannungswandlers gewährleistet. Damit bleibt vorderhand auch der Tonfrequenzerzeuger eingeschaltet. Durch die ebenfalls aufrecht erhaltene Kurzschliessung des Verstärkerausgangs durch den Transistor 18 wird verhindert, dass Oberwellen des Tonfrequenzerzeugers 13 und für andere Empfänger bestimmte, während dieser Zeit eintreffende Anrufe den aus den Transistoren 20 und 21 bestehenden Multivibrator störend beeinflussen können.

Ueber den Transistor 38 beginnt nun der früher beschriebene, den Widerstand 36 und den Kondensator 37 enthaltende Zeitkreis zu laufen. Sofern nun die aus den Transistoren 31 und 32 bestehende Kippschaltung ihren Zustand ändert, wird mittels des Transistors 61 die Masse von der Verbindung 6 entfernt, wodurch der Kondensator 29 sich aufladen kann und die Rückstellung des Schieberegisters 7 eintritt. Infolgedessen erscheint an der Verbindung 12 das dem Ruhezustand entsprechende positive Potential, worauf die Transistoren 38 und 55 gesperrt werden, der Tonerzeuger 13 abgestellt wird und alles wiederum in den Ruhezustand zurückkehrt. Der Kondensator 37 bleibt vorderhand geladen. Beim Empfang der nächsten Schwingungspakete, wenn die Verbindung 41 wiederum impulsweise Nullpotential annimmt, wird der im Ruhezustand leitende Transistor 59 gesperrt, wodurch im Zusammenwirken mit dem Widerstand 58 der Transistor 40 leitend wird und den Kondensator 37 entlädt.

Während der Zeit, während welcher ein Empfang von Schwingungspaketen erwartet wird, ist somit weder eine Verminderung der Empfindlichkeit des Verstärkers, noch eine Vortäuschung eines Empfangssignals durch vom Wandler erzeugte Störgeräusche möglich, da der Wandler während dieser Zeit ausgeschaltet ist. Während der Betriebszeit des Tonfrequenzerzeugers und des Gleichspannungswandlers ist eine solche Vortäuschung infolge der Kurzschliessung des Verstärkerausganges nicht möglich.

Diese Kurzschliessung könnte auch nach dem Filter 4 erfolgen, und die gleiche Wirkung könnte auch durch eine Abschaltung der Speisung des Verstärkers erreicht werden. Auf eine Unwirksamkeits-Schaltung des Verstärkers könnte auch verzichtet werden, wenn keine Gefahr bestünde, dass durch den Gleichspannungswandler und/ oder den Tonfrequenzerzeuger hervorgerufene Geräusche am Filterausgang störend erscheinen und einen Empfang von Signalen vortäuschen könnten.

## Ansprüche

1. Von einer Batterie gespeister, tragbarer Rufempfänger, welcher auf den drahtlosen Empfang mindestens eines als kodierte Folge von je gleich langen, eine einzige Frequenz aufweisenden Schwingungspaketen ausgesendeten Rufsignals anspricht, wobei diese Schwingungspakete zwei verschieden grosse Abstände untereinander aufweisen und diese Abstände für den Informationsgehalt der Folge massgebend sind, enthaltend einen die an seinen Eingang treffenden Signale verstärkenden und sie einem auf die genannte Frequenz abgestimmten Bandfilter (4) zuführenden Verstärker (1), enthaltend ferner einen monostabilen, während seiner Arbeitslage unbeeinflussbaren, von am Ausgang des Bandfilters (4) auftretenden Signalen angestossenen Multivibrator (20, 21, 23, 24, 25, 27), dessen Haltezeit der ausgesendeten Länge der genannten Schwingungspakete entspricht und dessen Betriebszustände das gesendete Signal wiedergeben, enthaltend ferner ein zu seinem Betrieb eine über der Batteriespannung liegende Speisespannung benötigendes Schieberegister (7) zur Serie-Parallel-Wandlung des durch den ersten Multivibrator wiedergegebenen gesendeten Signals und enthaltend einen Gleichspannungswandler (16) zur Erzeugung der dem Betrieb des Schieberegisters dienenden Speisespannung, gekennzeichnet durch vom Multivibrator (20, 21, 23, 24, 25, 27) beeinflusste erste Schaltungsmittel (46), welche von diesem Multivibrator während seines Arbeitszustandes ebenfalls in den Arbeitszustand versetzt werden und welche in ihrem Arbeitszustand den Gleichspannungswandler (16) speisen und in ihrem Ruhezustand diese Speisung unterbrechen.

2. Tragbarer Rufempfänger nach dem Anspruch 1, dadurch gekennzeichnet, dass an die ersten Schaltungsmittel (46) zweite Schaltungsmittel (18) angeschlossen sind, die in ihrem Arbeitszustand die Wirksamkeit des Verstärkers (1) verhindern und sie in ihrem Ruhezustand freigeben.

3. Tragbarer Rufempfänger nach dem Anspruch 2, mit einem der Abgabe eines Aufmerksamkeitszeichens dienenden Tonfrequenzerzeuger (13) und dritte Schaltungsmittel (11, 55), welche beim Eintreffen eines für den betreffenden Empfänger bestimmten Anrufs diesen Tonfrequenzerzeuger in Betrieb setzen, gekennzeichnet durch vierte Schaltungsmittel (57), welche die ersten und zweiten Schaltungsmittel (46, 18) während des Arbeitszustandes der dritten Schaltungsmittel (11, 55) ebenfalls in den Arbeitszustand versetzen.

## Claims

1. Battery-powered, portable call receiver responsive to the wireless reception of at least one call signal transmitted as a coded sequence of oscillation packets which are equal in length and of a single frequency, these oscillation packets having intervals between them of two different lengths, these intervals being decisive for the information content of the sequence, containing an amplifier (1) amplifying the signals arriving at its input and supplying them to a band-pass filter (4) tuned to the said frequency, further containing a monostable multivibrator (20, 21, 23, 24, 25, 27) which cannot be influenced while in operative position and is triggered by signals occurring at the output of the band-pass filter (4), the holding time of the multivibrator corresponding to the transmitted length of the said oscillation packets and its operating states reproducing the transmitted signal, further containing, for the series-to-parallel conversion of the transmitted signal reproduced by the first multivibrator, a shift register (7) needing for its operation a feed voltage higher than the battery voltage, and containing a DC voltage transformer (16) for producing the feed voltage needed for operating the shift register, characterized by first circuit means (46) influenced by the multivibrator (20, 21, 23, 24, 25, 27), which circuit means are put into operative state by this multivibrator during its own operative state and which feed the DC voltage transformer (16) in their operative state and interrupt this feed in their rest state.

2. Portable call receiver according to claim 1, characterized in that second circuit means (18) which prevent the activity of the amplifier (1) in their operative state and release it in their rest state are connected to the first circuit means (46).

3. Portable call receiver according to claim 2, having an audio frequency generator (13) for emitting an attention signal and third circuit means (11, 55) which put this audio frequency generator into operation upon arrival of a call intended for the respective receiver, characterized by fourth circuit means (57) which likewise put the first and second circuit means (46, 18) into operative state during the operative state of the third circuit means (11, 55).

pile, réagissant à la réception sans fil d'au moins un signal d'appel émis sous forme de succession codée de paquets d'oscillations ayant la même longueur et présentant une fréquence unique, ces paquets d'oscillations présentant entre eux deux intervalles de différente grandeur lesquels sont déterminants pour le contenu d'information de la succession, comprenant un amplificateur (1) qui amplifie les signaux se présentant à son entrée et les conduit à un filtre passe-bande (4) accordé à ladite fréquence, comprenant aussi un multivibrateur monostable (20, 21, 23, 24, 25, 27) non influençables durant son état de travail et actionné par les signaux apparaissant à la sortie du filtre passe-bande (4), son temps de maintien correspondant à la longueur d'émission desdits paquets d'oscillations, et son état fonctionnel reproduisant le signal émis, comprenant encore un registre à décalage, nécessitant pour son fonctionnement une tension supérieure à la tension de pile, pour la transformation série/parallèle du signal émis reproduit par le premier multivibrateur, et comprenant un élévateur de tension continue (16) pour engendrer la tension servant au fonctionnement du registre à décalage, caractérisé par des premiers moyens de commutation influencés par le multivibrateur (20, 21, 23, 24, 25, 27), lesquels devant l'état de travail du multivibrateur, sont également amenés à l'état de travail par celui-ci, ces moyens alimentant l'élévateur de tension (16) dans leur état de travail et interrompant cette alimentation dans leur état de repos.

2. Récepteur d'appel portatif selon la revendication 1, caractérisé en ce que, aux premiers moyens de commutation (46), sont connectés des seconds moyens de commutation (18) qui empêchent le fonctionnement de l'amplificateur (1) dans leur état de travail et qui l'autorisent dans leur état de repos.

3. Récepteur d'appel selon la revendication 2, muni d'un générateur de fréquence sonore (13) servant à la délivrance d'un signal pour attirer l'attention, et de troisièmes moyens commutateurs (11, 55) qui mettent en fonction ce générateur de fréquence sonore lors de l'apparition d'un appel pour le récepteur correspondant, caractérisé par des quatrièmes moyens de commutation (57) qui mettent également à l'état de travail les premiers et deuxièmes moyens de commutation (46, 18) devant l'état de travail des troisièmes moyens de commutation (11, 55).

**Revendications**

1. Récepteur d'appel portatif alimenté par une

0 032 598